# FASCICULE DE BREVET EUROPEEN

(11) **EP 2 659 613 B1**
(45) Date de publication et mention de la délivrance du brevet: **15.08.2018**
(21) Numéro de dépôt: 11802707.7
(22) Date de dépôt: 16.12.2011
(51) Int. Cl.: H04L 9/08

(54) **PROCEDE DE TRANSMISSION ET DE RECEPTION D'UN CONTENU MULTIMEDIA**
VERFAHREN ZUM SENDEN UND EMPFANGEN VON MULTIMEDIA-INHALTEN
METHOD OF TRANSMITTING AND RECEIVING A MULTIMEDIA CONTENT

(30) Priorité: 29.12.2010 FR 1061339
(43) Date de publication de la demande: 06.11.2013
(73) Titulaire: Viaccess, 92057 Paris La Défense (FR)
(72) Inventeur: HAMON, Vincent, F-35000 Rennes (FR); DUBROEUCQ, Gilles, F-28130 Saint Piat (FR)
(74) Mandataire: Colombo, Michel
(86) Numéro de dépôt international: PCT/EP2011/073148
(87) Numéro de publication internationale: WO 2012/089542

(56) Documents cités:
- EP-A1- 0 822 720
- EP-A1- 1 320 006
- WO-A2-2009/112966
- FR-A1- 2 922 393
- US-A- 5 937 068
- US-A1- 2003 138 103
- US-A1- 2009 080 648
- US-A1- 2010 246 819
- US-B1- 6 222 924
- CHOW S ET AL: "Selected Areas in Cryptography, White-Box Cryptography and an AES Implementation", SELECTED AREAS IN CRYPTOGRAPHY : 9TH ANNUAL INTERNATIONAL WORKSHOP ; REVISED PAPERS / SAC 2002, ST. JOHN'S, NEWFOUNDLAND, CANADA, AUGUST 15 - 16, 2002; [LECTURE NOTES IN COMPUTER SCIENCE ; 2595], SPRINGER VERLAG, BERLIN (DE), vol. 2595, 15 August 2002 (2002-08-15), pages 250-270, XP002587883, ISBN: 978-3-540-00622-0

## Description

L'invention concerne un procédé de transmission et de réception d'un contenu multimédia. L'invention concerne également un procédé de génération de messages ECM et un procédé de réception de messages ECM. L'invention concerne enfin un émetteur, un terminal de réception et un support d'enregistrement d'informations pour la mise en oeuvre de ces procédés.

L'invention s'applique en particulier au domaine du contrôle d'accès pour la fourniture de programmes multimédias payants tels que la télévision payante.

Dans cette description, on désigne plus spécifiquement par « contenu multimédia » un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Pour sécuriser et soumettre la visualisation des contenus multimédias à certaines conditions, comme la souscription d'un abonnement payant par exemple, les contenus multimédias sont diffusés sous forme embrouillée et non pas en clair. Dans cette description, le canal est dit « embrouillé » lorsque le contenu multimédia diffusé sur ce canal est embrouillé.

Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre.

De plus, le mot de contrôle est généralement spécifique à un contenu multimédia, ce dernier étant aléatoirement ou pseudo aléatoirement tiré. Ainsi, si à un instant donné, N contenus multimédias sont simultanément diffusés sur N canaux, il existe N mots de contrôle différents et indépendants employés chacun pour embrouiller l'un de ces contenus multimédias.

Ici, les termes « embrouiller » et « chiffrer » sont considérés comme des synonymes. Il en est de même pour les termes « désembrouiller » et « déchiffrer ».

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Par exemple, les mots de contrôle nécessaires pour désembrouiller la t-ième cryptopériode sont reçus par chaque terminal pendant la (t-1)-ième cryptopériode. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenus dans des messages ECM (Entitlement Control Message). On désigne ici par « cryptogramme » une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia.

Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé d'exploitation et un algorithme de chiffrement. Dans ce cas, l'information secrète est la clé d'exploitation utilisée et/ou un algorithme de déchiffrement permettant de déchiffrer le cryptogramme

L'information secrète doit être préservée en lieu sûr. Pour cela, il a déjà été proposé de stocker l'information secrète dans un processeur de sécurité tels qu'une carte à puce ou encore une carte virtuelle. Par « carte virtuelle » on désigne un composant logiciel comprenant un ensemble de ressources parmi lesquelles :
- le code exécutable d'un algorithme de chiffrement ou de déchiffrement, et
- le code exécutable d'un analyseur syntaxique pour localiser un cryptogramme d'un mot de contrôle à l'intérieur d'un message ECM ou le code exécutable d'un constructeur syntaxique pour construire un message ECM, et
- éventuellement des titres d'accès,
- éventuellement une clé d'exploitation utilisée en paramètre de l'algorithme de chiffrement ou de déchiffrement.

Un code exécutable est un code directement apte à être exécuté par un interpréteur ou machine virtuelle d'un niveau inférieur implémenté dans un microprocesseur. L'algorithme de chiffrement ou déchiffrement et l'analyseur syntaxique forme typiquement un programme exécutable ou plusieurs programmes exécutables.

Par la suite, on désigne par « carte virtuelle mère » une carte virtuelle utilisée pour calculer un message ECM. On désigne par « carte virtuelle fille» une carte virtuelle utilisée pour traiter un message ECM reçu. On dit qu'une carte virtuelle mère et une carte virtuelle fille sont « associées » l'une à l'autre si la carte virtuelle fille permet de traiter avec succès un message ECM reçu, calculé à l'aide de la carte virtuelle mère.

Dans ce contexte, un procédé de transmission et de réception d'un contenu multimédia dont chaque cryptopériode CPₜ est embrouillée à l'aide d'un mot de contrôle CWₜ respectif, connu du déposant comporte :
- le chiffrement, par un émetteur, du mot de contrôle CWₜ à l'aide d'une clé d'exploitation et d'un code exécutable d'un algorithme de chiffrement contenus dans une carte virtuelle mère pour obtenir un cryptogramme CWₜ*,
- la génération d'un message ECM incorporant le cryptogramme CWₜ* à l'aide d'un code exécutable d'un constructeur syntaxique contenu dans la carte virtuelle mère et la transmission de ce message ECM à un terminal,
- la réception par le terminal du message ECM, la localisation de la position du cryptogramme CW*ₜ dans le message ECM reçu à l'aide d'un code exécutable d'un analyseur syntaxique, puis le déchiffrement du cryptogramme CWₜ* à l'aide d'une clé d'exploitation d'un algorithme de déchiffrement, le code exécutable de l'analyseur syntaxique et de l'algorithme de déchiffrement étant contenus dans une carte virtuelle fille associée à la carte virtuelle mère, et le désembrouillage de la cryptopériode CPₜ du contenu multimédia embrouillée à l'aide du mot de contrôle déchiffré CWₜ.

L'utilisation de cartes virtuelles permet de remplacer à moindre coût et rapidement des informations secrètes dans les terminaux. Par exemple, le remplacement d'une carte virtuelle permet de modifier l'algorithme de chiffrement et de déchiffrement utilisé lorsqu'une faille sécuritaire est découverte. Toutefois, l'utilisation d'une carte virtuelle en elle-même n'apporte pas de gain sécuritaire par rapport à l'utilisation d'une carte à puce.

De l'état de la technique est également connu :
- FR2922393A1,
- EP1320006A1,
- WO2009/112966A2, et
- US2009/080648A1.

L'invention vise à accroître la sécurité des procédés de transmission et de réception d'un contenu multimédia utilisant des cartes virtuelles.

L'invention porte ainsi sur un procédé de transmission et de réception d'un contenu multimédia conforme à la revendication 1.

Dans le procédé présenté ci-dessus, en changeant au minimum toutes les deux heures de cartes virtuelles mère et fille, on augmente la variété des clés et des algorithmes employés ce qui complexifie la récupération de l'information secrète par un utilisateur illicite, et le partage de cette information avec d'autres utilisateurs pirates. En particulier, dans le procédé ci-dessus la récupération illicite d'informations secrètes est rendue plus difficile, non seulement par le changement fréquent de la clé d'exploitation, mais aussi par le changement fréquent de l'algorithme de chiffrement et/ou du constructeur syntaxique. Par exemple, la récupération illicite de la clé d'exploitation est rendue plus difficile car en changeant le constructeur syntaxique, le format du message ECM et, par exemple l'emplacement de cette clé dans un message ECM, est modifié. De la sorte il devient plus difficile pour un pirate informatique d'extraire correctement d'un message ECCM le cryptogramme de cette clé. Le changement de l'algorithme de chiffrement rend la récupération illicite de la seule clé d'exploitation inutile car il faut aussi récupérer l'algorithme de chiffrement ou de déchiffrement à utiliser avec cette clé. La quantité d'informations à récupérer illicitement pour désembrouiller correctement un contenu multimédia et donc accrue et, dans le même temps, la fréquence de renouvellement de ces informations est également accrue. Le travail des pirates informatiques est donc rendu plus complexe et la sécurité du procédé de transmission et de réception de contenus multimédias est donc accrue.

Les modes de réalisation de ce procédé peuvent comporter la caractéristique de la revendication dépendante.

Les modes de réalisation de ce procédé présentent en outre l'avantage suivant:
▪ l'utilisation combinée d'un algorithme de chiffrement ou de déchiffrement et d'un constructeur syntaxique permet de chiffrer un mot de contrôle et de faire varier le format du message ECM (par exemple la localisation du cryptogramme du mot de contrôle dans le message ECM), de manière à rendre plus complexe pour un utilisateur illicite le déchiffrement de ce message ECM.

L'invention concerne également un procédé de génération de messages ECM conforme à la revendication 3.

Les modes de réalisation de ce procédé peuvent comporter une ou plusieurs des caractéristiques des revendications dépendantes.

Les modes de réalisation de ce procédé comportent en outre les avantages suivants:
▪ lorsque l'on transmet l'identifiant de la carte virtuelle dans un message ECM, la fréquence de changement d'une carte virtuelle par une autre carte virtuelle peut être accélérée,
▪ lorsque les cartes virtuelles mères sont préenregistrées on minimise le temps de commutation entre une précédente carte virtuelle mère et une nouvelle carte virtuelle mère, au niveau de l'émetteur,
▪ lorsque la carte virtuelle mère est sélectionnée pseudo-aléatoirement, on augmente la sécurité du procédé en rendant difficile pour un utilisateur illicite de prévoir à l'avance quelle sera la carte virtuelle fille associée à utiliser pour déchiffrer un prochain cryptogramme, et
▪ les cartes virtuelles filles sont préenregistrées, on minimise le temps de commutation entre une précédente carte virtuelle fille et une nouvelle carte virtuelle fille, au niveau du terminal.

L'invention concerne également un procédé de réception conforme à la revendication 8.

Les modes de réalisation de ce procédé peuvent comporter une ou plusieurs des caractéristiques des revendications dépendantes.

Les modes de réalisation de ce procédé comportent en outre les avantages suivants:
▪ lorsque le procédé comprend le mécanisme d'instructions additionnelles tel que présenté plus haut, on sécurise plus encore le procédé.

L'invention concerne enfin un support d'enregistrement d'informations, comportant des instructions pour l'exécution d'un des procédés présentés plus haut, lorsque ces instructions sont exécutées par un calculateur électronique.

L'invention concerne également un émetteur conforme à la revendication 13.

L'invention concerne enfin un terminal de réception conforme à la revendication 14.

D'autres caractéristiques et avantages de l'invention ressortiront clairement de la description qui en est faite ci-après, à titre indicatif et nullement limitatif, en référence aux dessins annexés, dans lesquels :
- la figure 1 est une illustration schématique d'un système d'émission et de réception de contenus multimédias embrouillés,
- la figure 2 est une illustration schématique d'un module de calcul pour le système d'émission de la figure 1,
- la figure 3 est une illustration schématique d'un circuit intégré pour le système d'émission de la figure 1,
- les figures 3a, 3b et 3c sont des illustrations schématiques de bases de données et d'une table préenregistrées dans des mémoires du circuit intégré de la figure 3,
- la figure 4 est une illustration schématique d'une carte virtuelle mère et d'une carte virtuelle fille associées,
- la figure 5 est un organigramme d'un procédé de transmission d'un contenu multimédia embrouillé dans le système de la figure 1, et
- la figure 6 est un organigramme d'un procédé de réception d'un contenu multimédia embrouillé dans le système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

De plus, la terminologie utilisée est celle des systèmes d'accès conditionnels à des contenus multimédias. Pour plus d'informations sur cette terminologie, le lecteur peut se reporter au document suivant : « Functional Model of Conditional Access System », EBU Review, Technical European Broadcasting Union, Brussels, BE, n° 266, 21 décembre 1995.

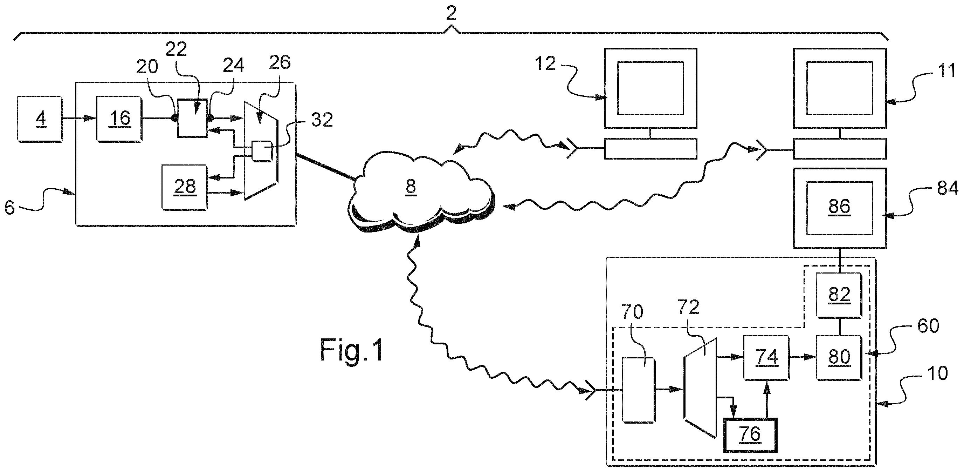

La figure 1 représente un système 2 d'émission et de réception de contenus multimédias embrouillés. Ici, les contenus multimédias sont linéarisés. Par « contenu multimédia linéarisé » on désigne un contenu multimédia pour lequel l'utilisateur ne contrôle par l'instant de transmission. Par exemple, un contenu multimédia correspond à une séquence d'un programme audiovisuel tel qu'une émission de télévision ou un film.

Les contenus multimédias en clair sont générés par une ou plusieurs sources 4 et transmis à un dispositif 6 de diffusion. Le dispositif 6 diffuse les contenus multimédias simultanément vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, seuls trois terminaux 10 à 12 de réception sont représentés.

Le dispositif 6 comprend un encodeur 16 qui code les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias dits compressés ainsi obtenus sont dirigés vers une entrée 20 d'un embrouilleur 22. L'embrouilleur 22 embrouille chaque contenu multimédia compressé pour conditionner sa visualisation à certaines conditions telles que l'achat d'un titre d'accès par les utilisateurs des terminaux de réception. Les contenus multimédias embrouillés sont restitués sur une sortie 24 raccordée à l'entrée d'un multiplexeur 26. L'embrouilleur 22 embrouille chaque contenu multimédia compressé à l'aide d'un mot de contrôle CW_{i,t} qui lui est fourni par un générateur de mots de contrôle CW_{i,t} 32. Typiquement, l'embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), ... etc.

Le générateur 32 est programmé pour:
- générer un mot de contrôle CW_{i,t}, et
- transmettre un mot de contrôle généré à l'embrouilleur 22 et à un système 28

Dans cet exemple, le générateur 32 génère pseudo-aléatoirement un mot de contrôle CW_{i,t}. Ici, le générateur 32 est compris dans le multiplexeur 26.

Par la suite, l'indice i est un identifiant du canal sur lequel est diffusé le contenu multimédia embrouillé et l'indice t est un numéro d'ordre identifiant la cryptopériode embrouillée avec ce mot de contrôle.

Le système 28 est plus connu sous l'acronyme CAS (Conditional Access System). Le système 28 est programmé pour:
- générer un cryptogramme CW*_{i,t} d'un mot de contrôle CW_{i,t}, transmis par le générateur 32, et
- générer pour chaque canal i un message ECM_{i,t} (Entitlement Control Message) contenant au moins le cryptogramme CW*_{i,t} du mot de contrôle CW_{i,t} utilisé par l'embrouilleur 22 pour embrouiller la cryptopériode t du canal i.

Les messages ECM_{i,t} et les contenus multimédias embrouillés sont multiplexés par le multiplexeur 26 avant d'être transmis sur le réseau 8.

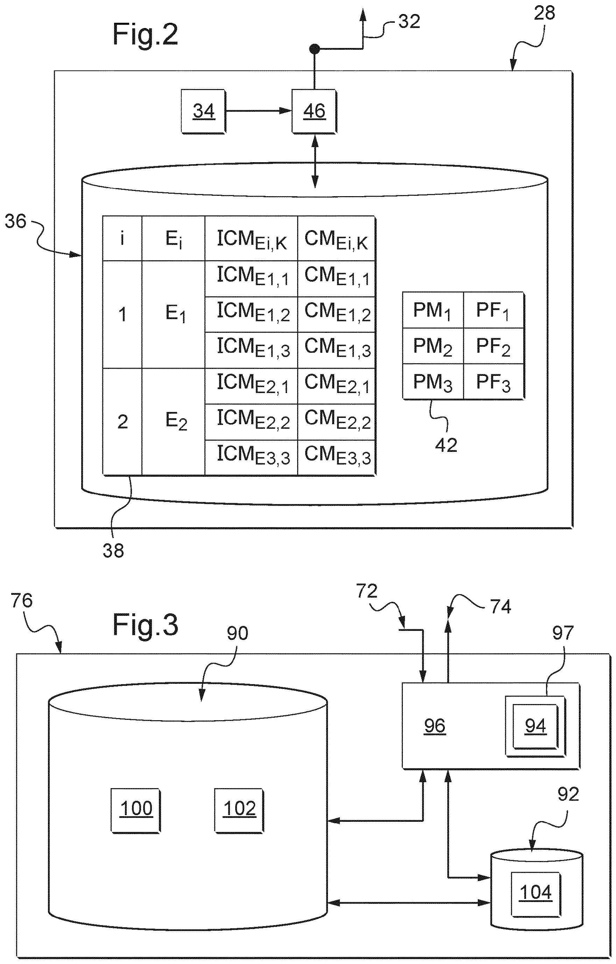

Le système 28 est détaillé plus loin en référence à la figure 2.

Le message ECM contenant le mot de contrôle CW_{i,t} est noté ECM_{i,t} dans la suite de la description où :
- l'indice i identifie le canal, et
- l'indice t est un numéro d'ordre identifiant la position temporelle de ce message ECM par rapport aux autres messages ECM différents émis pour désembrouiller le canal i.

Ici, l'indice t identifie également la cryptopériode CP_{i,t} désembrouillable à l'aide du mot de contrôle CW_{i,t} contenu dans le message ECM_{i,t}. L'indice t est unique pour chaque cryptopériode CP_{i,t}.

Le même identifiant i est inséré dans tous les messages ECM_{i,t} contenant un cryptogramme CW*_{i,t} pour le désembrouillage des contenus multimédias diffusés sur ce canal i. A titre d'illustration, ici, l'embrouillage et le multiplexage des contenus multimédias est conforme au protocole DVB-Simulcrypt (ETSI TS 103 197). Dans ce cas, l'identifiant i peut correspondre à un couple « channel ID/stream ID » unique sur lequel sont envoyées toutes les requêtes de génération de message ECM pour ce canal.

Dans l'exemple, les terminaux 10 à 12 sont identiques. Aussi, par la suite seul le terminal 10 est décrit plus en détail.

Le terminal 10 est ici décrit dans le cas particulier où celui-ci est capable de désembrouiller un seul canal i à la fois. A cet effet, le terminal 10 comporte une seule ligne 60 de désembrouillage permettant le désembrouillage du canal i. Par exemple, la ligne 60 désembrouille le canal i pour l'afficher sur un afficheur 84.

Par exemple, l'afficheur 84 est une télévision, un ordinateur ou encore un téléphone fixe ou mobile. Ici, l'afficheur est une télévision.

La ligne 60 comprend un récepteur 70 de contenus multimédias diffusés. Ce récepteur 70 est raccordé à l'entrée d'un démultiplexeur 72 qui transmet d'un côté le contenu multimédia à un désembrouilleur 74 et d'un autre côté les messages ECM_{i,t} et EMM (Entitlement Management Message) à un circuit intégré 76.

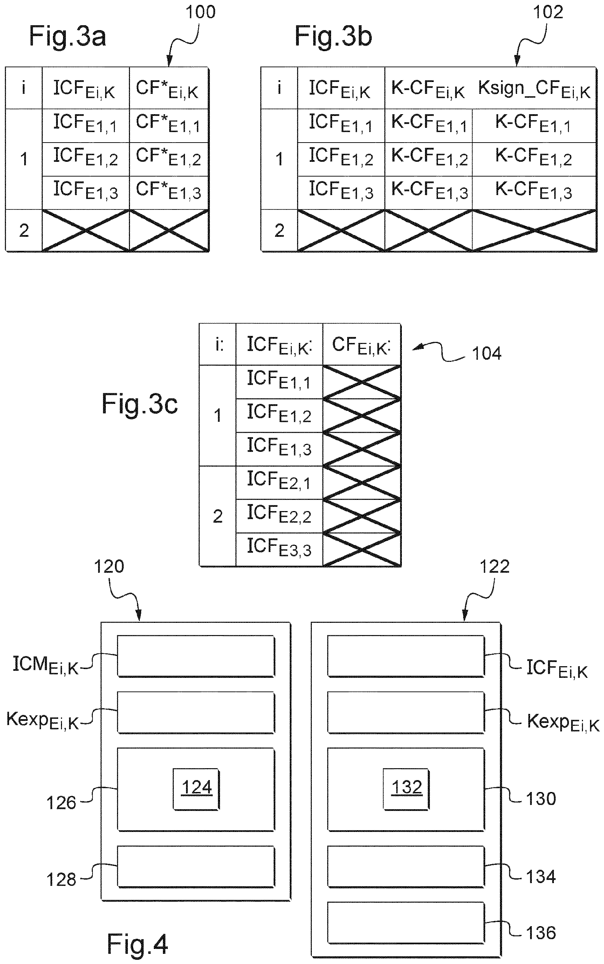

Le circuit 76 est apte à déchiffrer un cryptogramme CW*_{i,t} d'un mot de contrôle CW_{i,t} contenu dans le message ECM_{i,t}, et à fournir ce mot de contrôle au désembrouilleur 74. Le circuit 76 est détaillé plus loin en référence à la figure 3.

Le désembrouilleur 74 désembrouille le contenu multimédia embrouillé à partir du mot de contrôle transmis par le circuit 76. Le contenu multimédia désembrouillé est transmis à un décodeur 80 qui le décode. Le contenu multimédia décompressé ou décodé est transmis à une carte graphique 82 qui pilote l'affichage de ce contenu multimédia sur l'afficheur 84 équipé d'un écran 86. L'afficheur 84 affiche en clair le contenu multimédia sur l'écran 86.

Le système 28 va maintenant être décrit en référence à la figure 2.

Le système 28 comprend une mémoire non volatile 36. La mémoire 36 contient des bases de données 38 et 42.

La base de données 38 constitue une relation qui associe à chaque canal i, un ensemble Eᵢ de cartes virtuelles mères CM_{Ei,k}, où l'indice Eᵢ identifie l'ensemble auquel appartient la carte virtuelle CM_{Ei,k} et k est un nombre entier. Chaque carte virtuelle mère CM_{Ei,k} est identifiée par un identifiant ICM_{Ei,k} propre uniquement à cette carte virtuelle mère. Afin de simplifier la figure 1, la base de données 38 est illustrée seulement pour deux canaux 1 et 2. Les ensembles E₁ et E₂ comprennent ici trois cartes virtuelles mères préenregistrées, respectivement, CM_{E1,1}, CM_{E1,2} , CM_{E1,3} ,et CM_{E2,1}, CM_{E2,2} , CM_{E2,3}.

Les cartes virtuelles mères appartenant à un même ensemble sont distinctes. De préférence, une carte virtuelle mère appartenant à un ensemble Eᵢ appartient exclusivement à cet ensemble Eᵢ. Dans ces conditions, deux cartes virtuelles mères appartenant à deux ensembles Eᵢ distincts sont nécessairement distinctes. Une définition du terme « distinct » est donnée par la suite en référence à la figure 4.

La structure des cartes virtuelles mères est commune à toutes les cartes virtuelles mères. Cette structure est présentée plus loin en référence à la figure 4.

La base de données 42 contient des « rustines logicielles » plus connues sous le terme anglais de « patches logiciels » ou « patches ». Par « patch logiciel» on désigne un ensemble de portions de code comportant au moins une instruction, destiné à compléter ou remplacer une partie du code exécutable d'une carte virtuelle mère ou fille. Ce remplacement ne nécessite pas de re-compilation du code modifié. Typiquement, un patch est constitué de un ou plusieurs vecteurs de code (une série d'octets) de longueur(s) variable(s) chacun associé à une adresse cible (ou position de début) dans le code (zone mémoire contigüe) à remplacer. En définitive, il s'agit d'une liste de modifications à apporter sur le bloc de code.

Par la suite on désigne par « patch mère » un patch destiné à s'appliquer au code d'une carte virtuelle mère. On désigne par « patch fille » un patch destiné à s'appliquer au code d'une carte virtuelle fille.

Par exemple, un patch contient une instruction définissant un nombre d'itérations pour un algorithme de chiffrement ou de déchiffrement.

Dans l'exemple, la taille mémoire d'un patch logiciel est inférieure à 10ko et, de préférence, inférieure à 5ko de manière à pouvoir être transmis par l'intermédiaire d'un message ECM et/ou d'un message EMM.

La base de données 42 associe à un patch mère PMⱼ, un patch fille correspondant PFⱼ, où j est un nombre entier. Afin de simplifier la figure 1, la base de données 42 comporte dans l'exemple trois paires de patchs mère/fille.

La mémoire 36 est ici une mémoire de type flash.

Le système 28 comporte également un processeur 46 apte à :
- sélectionner pseudo-aléatoirement une carte virtuelle mère CM_{Ei,k} parmi un ensemble Eᵢ de cartes dans la base de donnée 38,
- sélectionner pseudo-aléatoirement un patch mère PMⱼ dans la base de données 42, et
- générer un cryptogramme CW*_{i,t} d'un mot de contrôle CW_{i,t} généré par le générateur 32 à partir d'une carte virtuelle mère CM_{Ei,k} sélectionnée, et d'un patch mère PMⱼ sélectionné,

Par ailleurs, le processeur 46 est apte à générer un message ECM_{i,t} incorporant:
- un cryptogramme CW*_{i,t} généré,
- un identifiant d'une carte virtuelle fille à utiliser pour déchiffrer le cryptogramme CW*_{i,t},
- un patch fille PFⱼ associé à un patch mère PMⱼ sélectionné, et
- une signature ou une redondance cryptographique MAC (pour « message authentication code ») permettant de vérifier l'intégrité du message ECM.

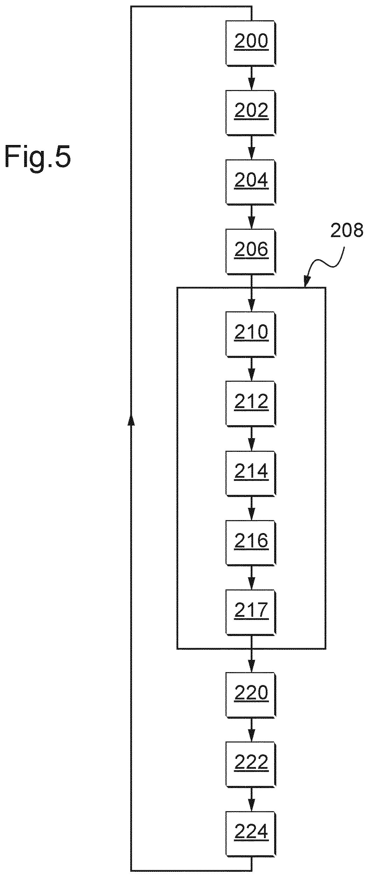

Par exemple, le processeur 46 est réalisé à partir d'un calculateur électronique programmable. Ce calculateur est apte à exécuter des instructions enregistrées sur un support d'enregistrement d'informations de manière à mettre en oeuvre le procédé de la figure 5. Par exemple, ces instructions sont également enregistrées dans la mémoire 36.

Le circuit 76 va maintenant être décrit en référence à la figure 3.

Le circuit 76 est plus connu sous l'acronyme SoC (Sytem On a Chip). Ici, le circuit 76 est de préférence en plus un circuit intégré sécurisé. L'utilisation de circuits intégrés sécurisés est bien connue de l'homme de l'art. Pour une description détaillée d'un exemple de circuit intégré sécurisé il est possible de se référer à la demande de brevet US20050169468. Ici, le circuit 76 comprend:
- une mémoire non volatile 90,
- une mémoire volatile 92, et
- un processeur 96.

La mémoire 90 contient une base de données 100 (plus visible sur la figure 3a). Cette base 100 associe à un identifiant ICF_{Ei,k} d'une carte fille CF_{Ei,k}, un cryptogramme CF*_{Ei,k} de cette carte virtuelle fille CF_{Ei,k}. Chaque cryptogramme de code CF*_{Ei,k} d'une carte virtuelle fille est ici obtenu en chiffrant le code exécutable d'une carte virtuelle fille CF_{Ei,k} avec une clé K_CF_{Ei,k}.

Avantageusement, pour chaque carte virtuelle mère d'identifiant ICM_{Ei,k} préenregistrée dans la mémoire 36, il existe au plus un cryptogramme de code CF*_{Ei,k} préenregistré dans la base 100 associé à l'identifiant ICF_{Ei,k}. Par là, on souligne la caractéristique selon laquelle, il existe des cartes mères préenregistrées dans la mémoire 36 pour lesquels aucun cryptogramme du code de la carte virtuelle fille associée n'est préenregistré dans la base 100.

Afin de simplifier la figure 3a, la base de données 100 contient uniquement trois cryptogrammes du code des cartes virtuelles filles CF*_{E1,1}, CF*_{E1,2} et CF*_{E1,3}, associés, respectivement, aux identifiants ICF_{E1,1}, ICF_{E1,2} et ICF_{E1,2}.

Ici, la base de données 100 ne comprend pas les cryptogrammes du code des cartes virtuelles filles CF*_{E2,1}, CF*_{E2,2} et CF*_{E2,3}.

La structure d'une carte virtuelle fille est commune à toutes les cartes virtuelles filles. Cette structure est détaillée plus loin en référence à la figure 4.

La mémoire 90 contient également une base de données 102 (plus visible sur la figure 3b). Cette base de données 102 associe à un canal i et à un identifiant ICF_{Ei,k}:
- la clé K_CF_{Ei,k} pour déchiffrer le cryptogramme CF*_{Ei,k} d'une carte virtuelle fille CF_{Ei,k}, et
- une clé Ksign_CF_{Ei,k} pour vérifier l'authenticité de la carte virtuelle fille CF_{Ei,k}.

Dans l'exemple, la base de données 102 comprend :
- les clé K_CF_{E1,1}, K_CF_{E1,2}, K_CF_{E1,3}, et
- les clés Ksign_CF_{E1,1} ,Ksign_CF_{E1,2} ,et Ksign_CF_{E1,3}.

La mémoire 92 contient une table 104 (plus visible sur la figure 3c) associant à un identifiant ICF_{Ei,k} une adresse d'une carte virtuelle fille CF_{Ei,k} mémorisée dans la mémoire 90. Les cartes virtuelles filles CF_{Ei,k} mémorisées dans la mémoire 90 sont de préférence sécurisées. Par « sécurisées » on désigne ici que les codes exécutables des cartes virtuelles filles sont obscurcis de manière à ne pouvoir être exécutés en tant que tel. Par exemple, une partie du code exécutable est chiffrée pour rendre inopérant une tentative de rétro-ingénierie. Dans l'exemple, la table 104 est vierge. Par là on désigne la caractéristique selon laquelle la table ne comporte aucune adresse de carte virtuelle fille CF_{Ei,k} sécurisée.

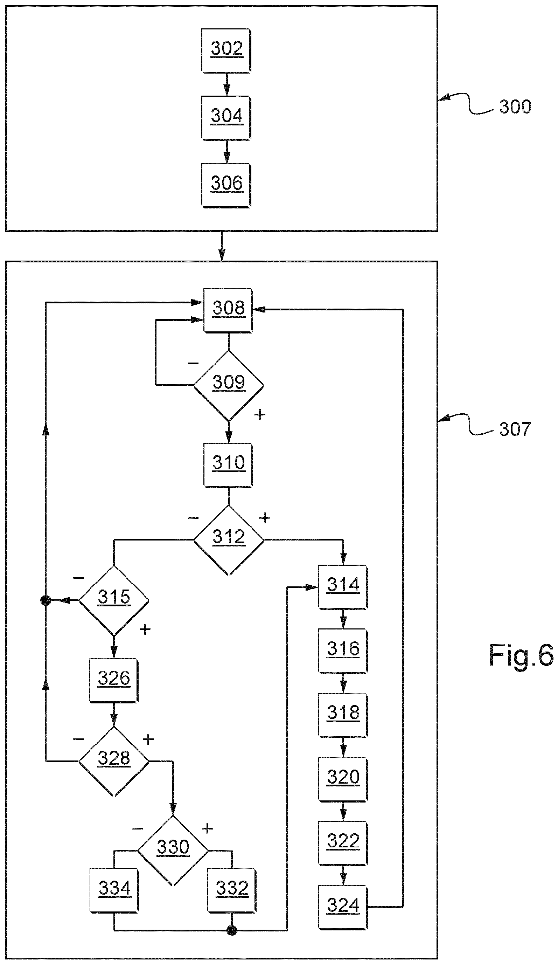

Le processeur 96 est ici un calculateur électronique programmable. Le processeur 96 est apte à exécuter des instructions enregistrées sur un support d'enregistrement d'informations pour mettre en oeuvre le procédé de la figure 6. Le processeur 96 comprend un coprocesseur 97 de sécurité. Ce coprocesseur 97 est programmé pour :
- sécuriser (obscurcir ou comme ici chiffrer) les données mémorisées dans la mémoire 92, et
- rétablir (ici déchiffrer) les données mémorisées dans la mémoire 92 de manière à les rendre exploitables par le processeur 96.

Dans l'exemple, le coprocesseur 97 contient une mémoire non volatile à écriture unique 94. La mémoire 94 contient une clé K_{chip} propre au terminal 10. Cette clé est par exemple gravée, lors de la fabrication du circuit intégré 76.

Une carte virtuelle mère 120 et une carte virtuelle fille 122 associées vont maintenant être décrites en référence à la figure 4.

Les cartes virtuelles mères 120 et fille 122 sont des librairies logicielles. Typiquement, les cartes virtuelles mères 120 et fille 122 sont des librairies de type DLL (pour "Dynamic Link Library") contenant leur code exécutable.

La carte virtuelle mère 120 comporte :
- un identifiant ICM_{Ei,k},
- une clé d'exploitation Kexp_{Ei,k},
- un algorithme de chiffrement 126 utilisant la clé d'exploitation Kexp_{Ei,k} pour chiffrer un mot de contrôle CW_{i,t} et obtenir le cryptogramme CW*_{i,t}, et
- un constructeur syntaxique 128, pour formater l'ECM, et positionner le cryptogramme du mot de contrôle CW_{i,t} ainsi que les autres paramètres (tels que les conditions d'accès) dans le message ECM_{i,t}, et ce de manière cohérente avec l'analyseur syntaxique de la carte virtuelle fille associée.

L'algorithme de chiffrement et le constructeur syntaxique forment un code destiné à être exécuté par le processeur 46.

Dans l'exemple, l'algorithme de chiffrement comprend une portion de code manquante 124. Cette portion 124 est destinée à recevoir un patch logiciel mère. Dans l'exemple, la portion 124 constitue seulement une partie de l'algorithme 126, et non pas l'algorithme 126 entier.

Par ailleurs, dans cette description, on désigne par "cartes virtuelles mères distinctes", deux cartes virtuelles différant l'une de l'autre par leur clé d'exploitation Kexp_{Ei,k} et/ou par leur algorithme de chiffrement 126 et/ou par leur constructeur syntaxique 128.

La carte virtuelle fille 122 comporte :
- un identifiant ICF_{Ei,k},
- la clé d'exploitation Kexp_{Ei,k},
- un algorithme de déchiffrement 130 utilisant la clé d'exploitation Kexp_{Ei,k}, pour déchiffrer le cryptogramme CW*_{i,t} crypté à partir de la carte mère 120 et obtenir le mot de contrôle CW_{i,t},
- un analyseur syntaxique 134, pour localiser le cryptogramme CW*_{i,t} dans un message ECM_{i,t}, et
- une signature 136 pour vérifier l'intégrité de la carte virtuelle fille 122.

L'algorithme de chiffrement et l'analyseur syntaxique forment un code destiné à être exécuté par le processeur 96.

Par "cartes virtuelles filles distinctes" on désigne deux cartes virtuelles filles différant l'une de l'autre par leur clé d'exploitation et/ou par leur algorithme de déchiffrement et/ou par leur analyseur syntaxique.

Un procédé de transmission d'un contenu multimédia embrouillé dans le système de la figure 1 va maintenant être décrit en référence à la figure 5. Le procédé mis en oeuvre est le même pour chaque canal. Ainsi, On décrit par la suite le procédé de transmission dans le cas particulier du canal 1.

Lors d'une étape 200 mise en oeuvre à un instant t, la source 4 transmet une cryptopériode CP_{1,t} en clair du canal 1 à l'encodeur 16. Dans l'exemple, une cryptopériode possède une durée comprise entre cinq secondes et une minute. Typiquement, la durée d'une cryptopériode est de 10 secondes.

Lors d'une étape 202, l'encodeur 16 encode la cryptopériode CP_{1,t} et transmet la cryptopériode encodée à l'embrouilleur 22.

Lors d'une étape 204, le générateur 32 sélectionne un mot de contrôle CW_{1,t} et transmet ce mot de contrôle à l'embrouilleur 22. Plus particulièrement, le générateur 32 sélectionne pseudo-aléatoirement un mot de contrôle CW_{1,t} et transmet ce mot de contrôle CW_{1,t} à l'embrouilleur 22 et au système 28.

Lors d'une étape 206, l'embrouilleur 22 embrouille la cryptopériode CP_{1,t} encodée lors de l'étape 202, à partir du mot de contrôle CW_{1,t} reçu lors de l'étape 204. L'embrouilleur 22 génère ainsi une cryptopériode embrouillée CP*_{1,t}. L'embrouilleur 22 transmet la cryptopériode embrouillée CP*_{1,t} au multiplexeur 26.

Lors d'une étape 208, le système 28 génère les différentes informations nécessaires pour construire le message ECM_{1,t} qui permettra le désembrouillage de la cryptopériode CP*_{1,t}.

Plus particulièrement, lors d'une opération 210, le processeur 46 sélectionne l'ensemble E₁ de cartes mères associé au canal 1 grâce à la base de données 38. Ensuite, il sélectionne pseudo-aléatoirement dans la base de données 38 une carte virtuelle mère CM_{1,k} parmi les cartes virtuelles mère CM_{1,1}, CM_{1,2}, et CM_{1,3} de l'ensemble E₁. Par exemple, le processeur 46 sélectionne la carte virtuelle mère CM_{1,1}.

Lors d'une opération 212, le processeur 46 sélectionne pseudo-aléatoirement dans la base de données 42 un patch mère PMⱼ parmi les patchs mère PM₁, PM₂ ,et PM₃. Par exemple, le processeur 46 sélectionne le patch mère PM₁.

Lors d'une opération 214, le processeur 46 complète la portion de code manquante 124 de l'algorithme de chiffrement 126 de la carte virtuelle CM_{1,1} sélectionnée lors de l'opération 210 avec le patch mère PM₁ sélectionné lors de l'opération 212. L'algorithme de chiffrement formé lors de cette étape 214 est par la suite appelé « algorithme de chiffrement opérationnel».

Lors d'une opération 216, le processeur 46 génère le cryptogramme CW*_{1,t} du mot de contrôle CW_{1,t} à partir :
- de l'algorithme de chiffrement opérationnel formé lors de l'opération 214, et
- de la clé d'exploitation Kexp_{E1,1} contenue dans la carte mère CM_{E1,1} sélectionnée.
- du mot de contrôle CW_{1,t} fourni par le générateur 32

Lors d'une opération 217, le processeur 46 exécute le constructeur syntaxique de la carte virtuelle mère CM_{E1,1} pour déterminer à quel emplacement dans la trame du message ECM_{1,t}, le cryptogramme CW*_{1,t} doit être inséré.

Lors d'une étape 220, le système 28 génère un message ECM_{1,t} contenant :
- l'identifiant ICF_{E1,1} de la carte virtuelle fille CM_{E1,1} associée à la carte virtuelle mère CM_{E1,1},
- le patch fille PF₁,
- le cryptogramme CW*_{i,t} du mot de contrôle CW_{i,t} permettant de désembrouiller la cryptopériode t du canal 1, et
- une redondance cryptographique MAC.

Lors de cette étape 220, le système 28 place dans la trame du message ECM_{1,t} le cryptogramme CW*_{i,t} à l'emplacement déterminé lors de l'opération 217.

Lors d'une étape 222, le générateur 28 transmet le message ECM_{1,t} au multiplexeur 26.

Lors d'une étape 224, le multiplexeur 26 multiplexe la cryptopériode embrouillée CP*_{1,t} formée lors de l'étape 206 et le message ECM_{1,t} transmis lors de l'étape 222.

Plus précisément, le message ECM_{1,t} est inséré dans le signal par le multiplexeur 26 avant la cryptopériode CP_{1,t}.

Les étapes 200 à 224 sont réitérées pour chaque cryptopériode. En conséquence, ici la carte virtuelle mère est changée toutes les cryptopériodes.

Un procédé de réception d'un contenu multimédia embrouillé par le terminal 10 va maintenant être décrit en référence à la figure 6.

Lors d'une phase 300 préliminaire, un utilisateur du terminal 10 souscrit à un abonnement auprès d'un fournisseur de contenus multimédias. Par exemple, le fournisseur offre la possibilité de visionner les canaux 1 et 2. Plus particulièrement, ici l'utilisateur paye une redevance pour pouvoir visionner uniquement le canal 1 en clair.

En réponse, l'opérateur délivre seulement les données nécessaires à l'utilisateur pour pouvoir désembrouiller le canal 1.

Lors d'une étape 302, le dispositif 6 chiffre les cartes virtuelles filles CF_{E1,1}, CF_{E1,2} ,et CF_{E1,3} associées aux cartes virtuelles mère CM_{E1,1}, CM_{E1,2}, et CM_{E1,3} de l'ensemble E1, respectivement, à l'aide des clés K_CF_{E1,1}, K_CF_{E1,2} et K_CF_{E1,3} de manière à obtenir des cryptogrammes de code CF*_{E1,1}, CF*_{E1,2} ,et CF*_{E1,3} des cartes virtuelles filles.

Lors d'une étape 304, le dispositif 6 transmet par l'intermédiaire d'un ou plusieurs messages EMM:
- les cryptogrammes de code CF*_{E1,1}, CF*_{E1,2}, et CF*_{E1,3},
- les identifiants ICF_{E1,1}, ICF_{E1,2}, et ICF_{E1,3} des cartes virtuelles filles CF_{E1,1}, CF_{E1,2}, et CF_{E1,3},
- les clés K_CF_{E1,1}, K_CF_{E1,2} et K_CF_{E1,3} pour permettre au terminal 10 de déchiffrer les cryptogrammes CF*_{E1,1}, CF*_{E1,2}, et CF*_{E1,3}, et
- les clés Ksign_CF_{E1,1}, Ksign_CF_{E1,2} et Ksign_CF_{E1,3} pour permettre au terminal 10 de vérifier l'authenticité des cartes virtuelles filles CF_{E1,1}, CF_{E1,2}, et CF_{E1,3}.

Les clés K_CF_{E1,1}, K_CF_{E1,2} et K_CF_{E1,3}, et les clés Ksign_CF_{E1,1}, Ksign_CF_{E1,2} et Ksign_CF_{E1,3} sont avantageusement chiffrées au préalable à l'aide de la clé K_{chip}.

Lors d'une étape 306, le terminal 10 réceptionne le ou les messages EMM transmis par le dispositif 6 et préenregistre le contenu de ce ou ces messages dans les mémoires 90 et 92 pour former les bases de données 100, 102.

Lorsque la phase préliminaire 300 s'achève, les bases de données 100, 102, et la table 104 en mémoire 90 et 92 sont telles que représentées sur les figures 3a, 3b et 3c.

Lors d'une phase 307 d'utilisation, l'utilisateur souhaite utiliser un contenu multimédia. Par exemple, l'utilisateur souhaite regarder un film sur le canal 1 à l'instant t.

A cet effet, lors d'une étape 308 le terminal 10 se connecte au réseau 8 et reçoit un contenu multimédia multiplexé par l'intermédiaire du récepteur 70. Ce contenu multiplexé est démultiplexé par le démultiplexeur 72. Le démultiplexeur 72 transmet la cryptopériode embrouillée CP*_{1,t} au désembrouilleur 74, et le message ECM_{1,t} au processeur 96.

On rappelle que le message ECM_{1,t} contient:
- l'identifiant ICF_{E1,1} de la carte virtuelle fille CF_{E1,1},
- le patch fille PF₁,
- le cryptogramme CW*_{1,t}, et
- une redondance cryptographique MAC.

Lors d'une étape 309, le processeur 96 vérifie l'intégrité du message ECM_{1,t} reçu en recalculant la redondance cryptographique MAC de ce message ECM_{1,t} et en comparant le résultat obtenu avec la redondance cryptographique MAC contenue dans le message ECM_{1,t} reçu. Si le résultat du calcul coïncide avec la redondance cryptographique MAC contenue dans le message ECM_{1,t} reçu alors on procède à une étape 310. Sinon le procédé est interrompu.

Lors d'une étape 310, le processeur 96 récupère l'identifiant ICF_{E1,1} dans le message ECM_{1,t} reçu.

Lors d'une étape 312, le processeur 96 vérifie dans la base de donnée 104, à l'aide de l'identifiant ICF_{E1,1} reçu, si celle-ci comporte déjà la carte virtuelle fille CF_{E1,1} pour déchiffrer le cryptogramme CW*_{1,t} contenu dans le message ECM_{1,t}. Si la base 104 comporte la carte virtuelle fille CF_{E1,1} alors on procède directement à une étape 314. En effet, dans ce cas, il n'est pas nécessaire de déchiffrer le cryptogramme CF*_{E1,1} pour obtenir la carte CF_{E1,1} en clair. Dans le cas contraire, on procède à une étape 315.

Lors de l'étape 315, le processeur 96 vérifie dans la base de données 100 si celle-ci contient l'identifiant ICF_{E1,1}. Dans l'affirmative, cela signifie que le terminal contient le cryptogramme CF*_{E1,1} et qu'il est donc autorisé à visualiser le canal 1.

On procède alors à une étape 326.

Si la base 104 ne contient pas le cryptogramme CF*_{E1,1} alors le processeur 96 ne peut pas déchiffrer le cryptogramme CW*_{1,t}. Dans ces conditions, l'utilisateur n'est pas autorisé à visionner le canal 1 en clair et le procédé de réception s'achève.

Lors de l'étape 326, le processeur 96 déchiffre les clés K_CF_{E1,1} et Ksign_CF_{E1,1} associées à l'identifiant ICF_{E1,1} dans la base 102 à l'aide de la clé K_{chip}. Puis, le processeur 96 déchiffre le cryptogramme CF*_{E1,1} à partir de la clé K_CF_{E1,1} de manière à obtenir la carte virtuelle fille déchiffrée CF_{E1,1}.

Lors d'une étape 328, le processeur 96 vérifie la signature de la carte virtuelle fille déchiffrée CF_{E1,1} à l'aide de la clé Ksign_CF_{E1,1}. Par exemple, le processeur 96 applique une fonction de hachage, plus connue sous le terme anglais de « Hash », sur la carte virtuelle CF_{E1,1} pour obtenir une première empreinte de cette carte. Ensuite, il déchiffre la signature 136 de la carte CF_{E1,1} avec la clé publique Ksign_CF_{E1,1} pour obtenir une deuxième empreinte. Si les première et deuxième empreintes correspondent, alors la carte CF_{E1,1} est correctement authentifiée.

Dans ce cas, lors d'une étape 330, le processeur 96 interroge la mémoire 92 pour connaître son espace mémoire disponible. Si la mémoire 92 possède un espace mémoire suffisant, la carte virtuelle fille CF_{E1,1} déchiffrée lors de l'étape 326 est sécurisée par le coprocesseur 97, copiée dans la mémoire 90, répertoriée dans la base de données 104 lors d'une étape 332 et associée à l'identifiant ICM_{E1,1}. Par « répertorier » on désigne une opération lors de laquelle l'adresse mémoire à laquelle est copiée la carte virtuelle fille CF_{E1,1} est associée à l'identifiant ICF_{E1,1}, dans la base de données 104.Sinon, lors d'une étape 334 la mémoire 92 supprime une des cartes virtuelles CF_{Ei,k} dans la base 104 pour pouvoir recevoir la carte virtuelle fille CF_{E1,1}. A titre d'exemple, ici on applique l'algorithme LRU (pour « least recent used »). La carte virtuelle fille dans la mémoire 90 la plus anciennement utilisée est d'abord supprimée. Puis, la carte virtuelle fille CF_{E1,1} est sécurisée par le coprocesseur 97, copiée dans la mémoire 90 puis répertoriée..

Une fois l'étape 332 ou 334 achevée, on procède à l'étape 314.

Si la signature calculée lors de l'étape 328 ne coïncide pas avec la signature 136 contenue dans la carte virtuelle déchiffrée lors de l'étape 326 alors la carte virtuelle CF_{E1,1} n'est pas authentifiée. Dans ce cas, le processeur 96 ne déchiffre pas le cryptogramme CW*_{1,t} et le procédé de réception est interrompu.

Lors de l'étape 314, le processeur 96 exécute l'analyseur de syntaxe de la carte virtuelle fille CF_{E1,1} et extrait dans le message ECM_{1,t} le cryptogramme CW*_{1,t} et le patch fille PF₁.

Lors d'une étape 316, le processeur 46 applique le patch fille PF₁ extrait lors de l'étape 314 à l'algorithme de déchiffrement de la carte virtuelle fille CF_{1,1}. L'algorithme de déchiffrement formé lors de cette étape 322 est par la suite appelé « algorithme de déchiffrement opérationnel ».

Lors d'une étape 318, le processeur 96 déchiffre le cryptogramme CW*_{1,t} à partir de l'algorithme de déchiffrement opérationnel formé lors de l'étape 316 et de la clé d'exploitation Kexp_{E1,1} contenue dans la carte virtuelle fille CF_{E1,1}. Ainsi, lors de cette étape 318, le processeur 96 obtient le mot de contrôle CW_{1,t} en clair.

Lors d'une étape 320, le processeur 96 transmet le mot de contrôle CW_{1,t} en clair au désembrouilleur 74.

Lors d'une étape 322, le désembrouilleur 74 désembrouille la cryptopériode embrouillée CP*_{1,t} à partir du mot de contrôle CW_{1,t} transmis par le processeur 96 et obtient une cryptopériode CP_{1,t} désembrouillée. La cryptopériode CP_{1,t} désembrouillée est alors transmise au décodeur 80.

Lors d'une étape 324, le décodeur 80 décode la cryptopériode CP_{1,t} puis transmet le résultat du décodage à la carte graphique 82. La carte graphique 82 pilote enfin l'affichage de ce résultat sur l'écran 86.

Les étapes 308 à 334 sont réitérées pour chaque cryptopériode.

De nombreux autres modes de réalisation sont possibles.

Par exemple, les cartes mères ne sont pas nécessairement préenregistrées dans la mémoire 36. Les cartes virtuelles mères peuvent être générées dynamiquement par le processeur 46 lors de la phase préliminaire 300, avant de transmettre les cartes virtuelles filles associées.

Dans une variante, la sélection par le terminal 10 d'une carte virtuelle fille à utiliser pour déchiffrer un cryptogramme CW*ₜ consiste en la génération dynamique de la carte virtuelle par le processeur 96, à partir d'une fonction préenregistrée dans la mémoire 90 et de l'identifiant ICF_{Ei,k} reçu.

Dans une autre variante, la syntaxe des messages ECM est toujours la même. Dans ce cas, les cartes virtuelles mère et fille comportent , respectivement, toujours le même constructeur syntaxique et le même analyseur syntaxique.

Toujours en variante, les patchs logiciels mère et fille s'appliquent respectivement aux codes du constructeur syntaxique et de l'analyseur syntaxique des cartes virtuelles.

En variante, à une carte virtuelle mère ou à un ensemble Eᵢ de cartes virtuelles mères on associe un ensemble spécifique de patches mères propre uniquement à cette carte ou à cet ensemble Eᵢ.

Également en variante, les patches mères et/ou filles sont directement mémorisés dans les cartes virtuelles mères et filles, respectivement.

Également en variante, les patchs logiciels mère et fille peuvent être omis. Dans ce cas, les algorithmes de chiffrement et déchiffrement des cartes virtuelles mère et fille ne comportent plus de partie manquante de code 124 et 132.

Dans une autre variante, il n'existe pas d'ensemble Eᵢ de cartes virtuelles mères spécifique à chaque canal i. Par exemple, il existe un unique ensemble E pour tous les canaux. Dans ce cas, toutes les cartes virtuelles de cet ensemble peuvent être utilisées pour chiffrer un mot de contrôle servant à embrouiller une cryptopériode d'un des canaux i. De préférence, afin de restreindre l'accès de certains canaux à des utilisateurs possédant des titres d'accès, des conditions d'accès sont incorporées dans les messages ECM transmis par le dispositif 6. Ces conditions d'accès et les titres d'accès enregistrés dans la carte virtuelle fille sont comparés lors de la réception d'un message ECM afin de déterminer si le processeur peut déchiffrer ou pas le cryptogramme incorporé dans ce message ECM.

Dans une autre variante, le processeur de sécurité qui exécute le procédé de réception de la figure 5 ou 6 est le processeur d'une carte à puce.

Toujours en variante, les messages ECM ne comportent pas un identifiant ICF d'une carte virtuelle fille en particulier mais l'identifiant d'un ensemble de carte virtuelles filles. Dans ce cas, lorsque le terminal de réception reçoit le message ECM, le terminal essaie toutes les cartes virtuelles filles associées à cet ensemble jusqu'à trouver la carte virtuelle fille permettant de déchiffrer le cryptogramme CW* contenu dans le message ECM.

Dans une autre variante, aucun identifiant de la nouvelle carte virtuelle fille à utiliser n'est transmis au terminal. Par exemple, dans ce cas, le terminal teste à chaque fois qu'il reçoit un nouveau cryptogramme CW*ₜ si la carte virtuelle fille actuellement sélectionnée permet de déchiffrer correctement ce cryptogramme. Dans l'affirmative, il continue d'utiliser la carte virtuelle fille actuelle. Dans la négative, il essaye successivement toutes les cartes virtuelles filles qu'il a en mémoire jusqu'à trouver celle qui permet de déchiffrer ce cryptogramme. Cette dernière carte virtuelle fille est alors sélectionnée pour être utilisée à la place de l'ancienne.

En variante, lors de la phase 300 les cartes virtuelles filles ne sont pas transmises par l'intermédiaire de messages EMM mais par le biais d'un service dédié en broadcast (c'est à dire une diffusion à tous les terminaux connectés au réseau 8) ou multicast (c'est à dire une diffusion à un groupe particulier de terminaux connectés au réseau 8) tel que DVB-SSU ou DSM-CC, ou encore par le biais de message ECM.

Dans le cas où le réseau 8 est un réseau hybride (par exemple le réseau 8 est formé du réseau TNT et d'un réseau internet) le dispositif 6 peut transmettre aux terminaux une URL (pour Union Ressource Locator) d'un serveur de carte virtuelles filles. Chaque terminal télécharge les cartes virtuelles filles sur ce serveur. De préférence, le téléchargement des cartes virtuelles est sécurisé. Par exemple, l'utilisation des protocoles SSL (pour Secure Shell) ou HTTPS (pour Hyper Text Transfer Protocol Secured) et/ou l'utilisation d'une infrastructure à clé publique (plus connue sous le nom de PKI) est recommandé. Il est possible de mettre en oeuvre cette variante à partir de système utilisant l'IPTV ou la WebTV.

Afin de limiter dans le temps des cartes virtuelles filles, une durée de validité peut être incorporée dans chaque carte.

Dans le procédé de la figure 5, en variante, pendant plusieurs cryptopériodes, on conserve la même carte virtuelle mère mais on change de patch logiciel mère à chaque cryptopériode.

Dans une autre variante pour ce procédé, à chaque nouvelle cryptopériode, on change de carte virtuelle mère mais on conserve le même patch logiciel.

De préférence, la carte virtuelle mère est changée au minimum toutes les trente minutes, ou au minimum toutes les dix minutes, et de manière encore plus préférentielle au minimum toutes les minutes.

## Revendications

1. Procédé de transmission et de réception d'un contenu multimédia dont chaque cryptopériode CPₜ est embrouillée à l'aide d'un mot de contrôle CWₜ respectif, le procédé comportant :
- le chiffrement, par un émetteur, du mot de contrôle CWₜ à l'aide d'une clé d'exploitation et d'un code exécutable d'un algorithme de chiffrement contenus dans une carte virtuelle mère pour obtenir un cryptogramme CW*ₜ,
- la génération d'un message ECM (Entitlement Control Message) incorporant le cryptogramme CW*ₜ à l'aide d'un code exécutable d'un constructeur syntaxique contenu dans la carte virtuelle mère et la transmission de ce message ECM à un terminal,
- la réception par le terminal du message ECM, la localisation de la position du cryptogramme CW*ₜ dans le message ECM reçu à l'aide d'un code exécutable d'un analyseur syntaxique, puis le déchiffrement du cryptogramme à l'aide de la clé d'exploitation et d'un code exécutable d'un algorithme de déchiffrement, le code exécutable de l'analyseur syntaxique et de l'algorithme de déchiffrement étant contenus dans une carte virtuelle fille associée à la carte virtuelle mère, et
- le désembrouillage de la cryptopériode CPₜ du contenu multimédia embrouillé à l'aide du mot de contrôle déchiffré CWₜ,
**caractérisé en ce que** le procédé comporte également :
- le changement au minimum toutes les deux heures, par l'émetteur, de la carte virtuelle mère utilisée pour obtenir le cryptogramme CW*ₜ₊ₙ d'une cryptopériode suivante CPₜ₊ₙ du même contenu multimédia, la nouvelle carte virtuelle mère utilisée différant de la précédente carte virtuelle mère utilisée par sa clé d'exploitation et au moins le code exécutable de son algorithme de chiffrement ou du constructeur syntaxique,
- en réponse, la sélection par le terminal d'une nouvelle carte virtuelle fille à utiliser pour déchiffrer le cryptogramme CW*ₜ₊ₙ de manière à obtenir le mot de contrôle CWₜ₊ₙ,
- la sélection, en fonction du contenu multimédia à embrouiller, d'un ensemble de plusieurs cartes virtuelles mères différentes parmi plusieurs ensembles de cartes virtuelles mères, à l'aide d'une relation associant à chaque contenu multimédia un seul ensemble de cartes virtuelles mères, chaque carte virtuelle mère appartenant exclusivement à un unique ensemble, et
- les mots de contrôle pour embrouiller un contenu multimédia sont chiffrés uniquement à l'aide de cartes virtuelles mères sélectionnées dans l'ensemble associé à ce contenu, de manière à limiter l'accès au contenu multimédia embrouillé aux seuls terminaux de réception disposant d'un ensemble pré-enregistré de cartes virtuelles filles correspondant à cet ensemble de cartes virtuelles mères.

2. Procédé selon la revendication 1, dans lequel la nouvelle carte virtuelle mère utilisée diffère de la précédente carte virtuelle mère utilisée par le code exécutable de son algorithme de chiffrement et du constructeur syntaxique.

3. Procédé de génération de messages ECM pour la mise en oeuvre d'un procédé de transmission et de réception de contenu multimédia conforme à l'une quelconque des revendications précédentes, chaque message ECM comportant un cryptogramme CW*ₜ d'un mot de contrôle CWₜ utilisé pour embrouiller une cryptopériode CPₜ respective d'un même contenu multimédia, le procédé comportant:
a) le chiffrement du mot de contrôle CWₜ à l'aide d'une clé d'exploitation et d'un code exécutable d'un algorithme de chiffrement contenus dans une carte virtuelle mère pour obtenir le cryptogramme CW*ₜ, et
b) la génération d'un message ECM incorporant le cryptogramme CW*ₜ à l'aide d'un code exécutable d'un constructeur syntaxique contenu dans la carte virtuelle mère, **caractérisé en ce que**, le procédé comporte également :
c) le changement au minimum toutes les deux heures de la carte virtuelle mère utilisée pour obtenir le cryptogramme CW*ₜ₊ₙ d'une cryptopériode suivante CPₜ₊ₙ, la nouvelle carte virtuelle mère utilisée différant de la précédente carte virtuelle mère utilisée par la clé d'exploitation et au moins le code exécutable de son algorithme de chiffrement ou du constructeur syntaxique,
- la sélection, en fonction du contenu multimédia à embrouiller, d'un ensemble de plusieurs cartes virtuelles mères différentes parmi plusieurs ensembles de cartes virtuelles mères, à l'aide d'une relation associant à chaque contenu multimédia un seul ensemble de cartes virtuelles mères, chaque carte virtuelle mère appartenant exclusivement à un unique ensemble, et
- les mots de contrôle pour embrouiller un contenu multimédia sont chiffrés uniquement à l'aide de cartes virtuelles mères sélectionnées dans l'ensemble associé à ce contenu, de manière à limiter l'accès au contenu multimédia embrouillé aux seuls terminaux de réception disposant de l'ensemble pré-enregistré de cartes virtuelles filles correspondant à cet ensemble de cartes virtuelles mères.

4. Procédé selon la revendication 3, dans lequel le procédé comporte la transmission au terminal, dans un message ECM, d'un identifiant de la carte virtuelle fille à utiliser pour déchiffrer le cryptogramme CWₜ₊ₙ*.

5. Procédé selon l'une quelconque des revendications 3 à 4, dans lequel lors de l'étape c) la carte virtuelle mère est sélectionnée parmi un ensemble de cartes virtuelles préenregistrées à l'intérieur de l'émetteur, les cartes virtuelles appartenant à cet ensemble étant distinctes les unes des autres.

6. Procédé selon la revendication 5, dans lequel lors de l'étape c) la carte virtuelle mère est sélectionnée pseudo-aléatoirement parmi l'ensemble de cartes virtuelles préenregistrées à l'intérieur de l'émetteur.

7. Procédé de réception, par un terminal, pour la mise en oeuvre d'un procédé de transmission et de réception conforme aux revendications 1 à 2, ce procédé comportant :
e) la réception par l'intermédiaire d'un ou plusieurs messages ECM d'un cryptogramme CW*ₜ du mot de contrôle CWₜ,
f) la localisation de la position du cryptogramme CW*ₜ dans le message ECM reçu à l'aide d'un code exécutable d'un analyseur syntaxique puis le déchiffrement du cryptogramme à l'aide d'une clé d'exploitation et d'un code exécutable d'un algorithme de déchiffrement, le code exécutable de l'analyseur syntaxique et de l'algorithme de déchiffrement étant contenus dans une carte virtuelle fille associée à la carte virtuelle mère, et le désembrouillage de la cryptopériode CPₜ du contenu multimédia embrouillé à l'aide du mot de contrôle déchiffré CWₜ,
**caractérisé en ce que** le procédé comporte :
g) en réponse à un changement de carte virtuelle mère par l'émetteur,
- si l'ensemble de cartes virtuelles filles associé à ce contenu multimédia est préenregistré dans le terminal : la sélection par le terminal d'une carte virtuelle fille à utiliser pour le déchiffrement du cryptogramme CW*ₜ parmi cet ensemble de cartes virtuelles filles préenregistrées dans le terminal de manière à obtenir le mot de contrôle CWₜ, chaque carte virtuelle fille différant d'une autre carte virtuelle fille de l'ensemble par sa clé d'exploitation et au moins le code exécutable de son algorithme de chiffrement ou de l'analyseur syntaxique, et
- si l'ensemble de cartes virtuelles filles associé à ce contenu multimédia n'est pas préenregistré dans le terminal, l'absence de sélection par le terminal d'une carte virtuelle fille à utiliser pour le déchiffrement du cryptogramme CW*ₜ de manière à inhiber l'obtention du mot de contrôle CWₜ.

8. Procédé selon la revendication 7, dans lequel le procédé comporte:
- la réception d'un identifiant d'une carte virtuelle fille lors de l'étape e), et
- la sélection par le terminal de la carte virtuelle fille parmi l'ensemble de cartes préenregistrées à partir de l'identifiant reçu lors de l'étape g).

9. Procédé selon l'une quelconque des revendications 7 à 8, dans lequel le procédé comporte également :
- la réception, lors de l'étape e), par le terminal, d'une ou plusieurs instructions additionnelles, et
- en réponse, la modification du code exécutable de la carte virtuelle fille sélectionnée en complétant et/ou remplaçant une partie seulement des instructions du code exécutable de cette carte virtuelle fille par la ou les instructions reçues.

10. Procédé selon l'une quelconque des revendications 8 à 9, dans lequel le procédé comporte:
h) la réception par le terminal d'une carte virtuelle fille chiffrée,
i) la mémorisation de la carte virtuelle fille chiffrée reçue pour ajouter cette carte à l'ensemble de cartes virtuelles filles pré-enregistrées, et
j) le déchiffrement de la carte virtuelle fille chiffrée, en réponse à la réception de l'identifiant,
les étapes h), i), et j) étant exécutées avant la mise en oeuvre des étapes e) et g).

11. Support d'enregistrement d'informations, **caractérisé en ce qu'**il comporte des instructions pour l'exécution d'un procédé conforme à l'une quelconque des revendications 1 à 10, lorsque ces instructions sont exécutées par un calculateur électronique.

12. Émetteur pour la mise en oeuvre d'un procédé de génération de messages ECM selon l'une quelconque des revendications 3 à 6, l'émetteur comportant:
- un embrouilleur (22) pour embrouiller une cryptopériode CPₜ respective d'un contenu multimédia à l'aide d'un mot de contrôle CWₜ,
- un système (28) pour :
• chiffrer le mot de contrôle CWₜ à l'aide d'une clé d'exploitation et d'un code exécutable d'un algorithme de chiffrement contenus dans une carte virtuelle mère pour obtenir le cryptogramme CW*ₜ, et pour générer un message ECM incorporant le cryptogramme CW*ₜ, et pour
• générer un message ECM (Entitlement Control Message) incorporant le cryptogramme CW*ₜ à l'aide d'un code exécutable d'un constructeur syntaxique contenu dans la carte virtuelle mère,
**caractérisé en ce que** le système (28) est programmé pour :
- changer la carte virtuelle mère utilisée, au minimum toutes les deux heures afin d'obtenir le cryptogramme CW*ₜ₊ₙ d'une cryptopériode suivante CPₜ₊ₙ, la nouvelle carte virtuelle mère utilisée différant de la précédente carte virtuelle mère utilisée par la clé d'exploitation et au moins le code exécutable de son algorithme de chiffrement ou du constructeur syntaxique,
- sélectionner, en fonction du contenu multimédia à embrouiller, un ensemble de plusieurs cartes virtuelles mères différentes parmi plusieurs ensembles de cartes virtuelles mères, à l'aide d'une relation associant à chaque contenu multimédia un seul ensemble de cartes virtuelles mères, chaque carte virtuelle mère appartenant exclusivement à un unique ensemble, et
- chiffrer les mots de contrôle pour embrouiller un contenu multimédia uniquement à l'aide de cartes virtuelles mères sélectionnées dans l'ensemble associé à ce contenu, de manière à limiter l'accès au contenu multimédia embrouillé aux seuls terminaux de réception disposant de l'ensemble pré-enregistré de cartes virtuelles filles correspondant à cet ensemble de cartes virtuelles mères.

13. Terminal de réception pour la mise en oeuvre d'un procédé selon l'une quelconque des revendications 7 à 10, ce terminal de réception comportant :
- un ensemble (100, 104) de cartes virtuelles filles préenregistrées,
- un récepteur (70) apte à recevoir par l'intermédiaire d'un ou plusieurs messages ECM, un cryptogramme CW*ₜ du mot de contrôle CWₜ,
- un circuit intégré (76) programmé pour :
• localiser la position du cryptogramme CW*ₜ dans le message ECM reçu à l'aide d'un code exécutable d'un analyseur syntaxique puis déchiffrer ce cryptogramme à l'aide d'une clé d'exploitation et d'un code exécutable d'un algorithme de déchiffrement, le code exécutable de l'analyseur syntaxique et de l'algorithme de déchiffrement étant contenus dans une carte virtuelle fille associée à une carte virtuelle mère, et
• désembrouiller la cryptopériode CPₜ du contenu multimédia embrouillé à l'aide du mot de contrôle déchiffré CWₜ, et
**caractérisé en ce que** le circuit intégré (76) est programmé pour, en réponse à un changement de carte virtuelle mère par l'émetteur, :
- si l'ensemble de cartes virtuelles filles associé à ce contenu multimédia est préenregistré dans le terminal : sélectionner une nouvelle carte virtuelle fille à utiliser pour le déchiffrement du cryptogramme CW*ₜ dans cet ensemble de cartes virtuelles filles préenregistrées de manière à obtenir le mot de contrôle CWₜ₊ₙ., chaque carte virtuelle fille différant d'une autre carte virtuelle fille de l'ensemble par sa clé d'exploitation et au moins le code exécutable de son algorithme de chiffrement ou de l'analyseur syntaxique, et
- si l'ensemble de cartes virtuelles filles associé à ce contenu multimédia n'est pas préenregistré dans le terminal, l'absence de sélection par le terminal d'une carte virtuelle fille à utiliser pour le déchiffrement du cryptogramme CW*ₜ de manière à inhiber l'obtention du mot de contrôle CWₜ.

## Patentansprüche

1. Verfahren zum Senden und Empfangen eines Multimedia-Inhaltes, wovon jede Kryptoperiode CPₜ mit Hilfe eines jeweiligen Steuerworts CWₜ verwürfelt wird, wobei das Verfahren aufweist:
- das Verschlüsseln des Steuerworts CWₜ durch einen Sender mit Hilfe eines Nutzungsschlüssels und eines ausführbaren Codes eines Verschlüsselungsalgorithmus, die in einer virtuellen Mutterkarte enthalten sind, um ein Kryptogramm CW*ₜ zu erhalten,
- das Erzeugen einer ECM-Nachricht (Entitlement Control Message), die das Kryptogramm CW*ₜ enthält, mit Hilfe eines ausführbaren Codes eines Syntaxkonstruktors, der in der virtuellen Mutterkarte enthalten ist, und das Übertragen dieser ECM-Nachricht an ein Endgerät,
- das Empfangen der ECM-Nachricht durch das Endgerät, das Lokalisieren der Position des Kryptogramms CW*ₜ in der empfangenen ECM-Nachricht mit Hilfe eines ausführbaren Codes eines Parsers und das Entschlüsseln des Kryptogramms mit Hilfe von dem Nutzungsschlüssel und einem ausführbaren Code eines Entschlüsselungsalgorithmus, wobei der ausführbare Code des Parsers und des Entschlüsselungsalgorithmus in einer virtuellen Tochterkarte enthalten sind, die der virtuellen Mutterkarte zugeordnet wird, und
- das Entwürfeln der Kryptoperiode CPₜ des verwürfelten Multimedia-Inhaltes mit Hilfe des entschlüsselten Steuerworts CWₜ,
**dadurch gekennzeichnet, dass** das Verfahren auch aufweist:
- das Ändern mindestens alle zwei Stunden der virtuellen Mutterkarte durch den Sender, die verwendet wird, um das Kryptogramm CW*ₜ₊ₙ einer nächsten Kryptoperiode CPₜ₊ₙ desselben Multimedia-Inhalts zu erhalten, wobei sich die neue verwendete virtuelle Mutterkarte von der vorherigen verwendeten virtuellen Mutterkarte durch ihren Nutzungsschlüssel und mindestens den ausführbaren Code ihres Verschlüsselungsalgorithmus oder des Syntaxkonstruktors unterscheidet,
- als Antwort das Auswählen einer neuen virtuellen Tochterkarte durch das Endgerät, die zu verwenden ist, um das Kryptogramm CW*ₜ₊ₙ derart zu entziffern, um das Steuerwort CWₜ₊ₙ zu erhalten,
- das Auswählen in Abhängigkeit von dem zu verwürfelnden Multimedia-Inhalt eines Satzes von mehreren verschiedenen virtuellen Mutterkarten aus mehreren Sätzen von virtuellen Mutterkarten mit Hilfe von einer Beziehung, die jedem Multimedia-Inhalt einen einzigen Satz von virtuellen Mutterkarten zuordnet, wobei jede virtuelle Mutterkarte ausschließlich zu einem einzigen Satz gehört, und
- die Steuerwörter zum Verwürfeln eines Multimedia-Inhalts nur mit Hilfe von virtuellen Mutterkarten verschlüsselt werden, die aus dem Satz ausgewählt werden, der diesem Inhalt zugeordnet wird, derart, um den Zugriff auf den verwürfelten Multimedia-Inhalt nur auf die Empfangsendgeräte zu beschränken, die über einen vorher aufgezeichneten Satz von virtuellen Tochterkarten verfügen, der diesem Satz von virtuellen Mutterkarten entspricht.

2. Verfahren nach Anspruch 1, wobei sich die neue verwendete virtuelle Mutterkarte von der vorherigen verwendeten virtuellen Mutterkarte durch den ausführbaren Code ihres Verschlüsselungsalgorithmus oder des Syntaxkonstruktors unterscheidet.

3. Verfahren zum Erzeugen von ECM-Nachrichten zum Umsetzen eines Verfahrens zum Senden und Empfangen von einem Multimedia-Inhalt nach einem der vorhergehenden Ansprüche, wobei jede ECM-Nachricht ein Kryptogramm CW*ₜ eines Steuerworts CWₜ aufweist, das verwendet wird, um eine jeweilige Kryptoperiode CPₜ eines gleichen Multimedia-Inhalts zu verwürfeln, wobei das Verfahren aufweist:
a) das Verschlüsseln des Steuerworts CWₜ mit Hilfe eines Nutzungsschlüssels und eines ausführbaren Codes eines Verschlüsselungsalgorithmus, die in einer virtuellen Mutterkarte enthalten sind, um das Kryptogramm CW*ₜ zu erhalten, und
b) das Erzeugen einer ECM-Nachricht, die das Kryptogramm CW*ₜ enthält, mit Hilfe eines ausführbaren Codes eines Syntaxkonstruktors, der in der virtuellen Mutterkarte enthalten ist,
**dadurch gekennzeichnet, dass** das Verfahren auch aufweist:
c) das Ändern der verwendeten virtuellen Mutterkarte mindestens alle zwei Stunden, um das Kryptogramm CW*ₜ₊ₙ einer nächsten Kryptoperiode CPₜ₊ₙ zu erhalten, wobei sich die neue verwendete virtuelle Mutterkarte von der vorherigen verwendeten virtuellen Mutterkarte durch den Nutzungsschlüssel und mindestens den ausführbaren Code ihres Verschlüsselungsalgorithmus oder des Syntaxkonstruktors unterscheidet,
- das Auswählen in Abhängigkeit von dem zu verwürfelnden Multimedia-Inhalt eines Satzes von mehreren verschiedenen virtuellen Mutterkarten aus mehreren Sätzen von virtuellen Mutterkarten mit Hilfe von einer Beziehung, die jedem Multimedia-Inhalt einen einzigen Satz von virtuellen Mutterkarten zuordnet, wobei jede virtuelle Mutterkarte ausschließlich zu einem einzigen Satz gehört, und
- die Steuerwörter zum Verwürfeln eines Multimedia-Inhalts nur mit Hilfe von virtuellen Mutterkarten verschlüsselt werden, die aus dem Satz ausgewählt werden, der diesem Inhalt zugeordnet wird, derart, um den Zugriff auf den verwürfelten Multimedia-Inhalt nur auf die Empfangsendgeräte zu beschränken, die über den vorher aufgezeichneten Satz von virtuellen Tochterkarten verfügen, der diesem Satz von virtuellen Mutterkarten entspricht.

4. Verfahren nach Anspruch 3, **dadurch gekennzeichnet, dass** das Verfahren das Übertragen an das Endgerät in einer ECM-Nachricht einer Kennung der virtuellen Tochterkarte aufweist, die zu verwenden ist, um das Kryptogramm CWₜ₊ₙ* zu entziffern.

5. Verfahren nach einem der Ansprüche 3 bis 4, **dadurch gekennzeichnet, dass** bei dem Schritt c) die virtuelle Mutterkarte aus einem Satz von virtuellen Karten ausgewählt wird, die in dem Sender voraufgezeichnet werden, wobei sich die virtuellen Karten, die zu diesem Satz gehören, voneinander unterscheiden.

6. Verfahren nach Anspruch 5, wobei bei dem Schritt c) die virtuelle Mutterkarte aus dem Satz von virtuellen Karten pseudozufällig ausgewählt wird, die in dem Sender voraufgezeichnet werden.

7. Verfahren zum Empfangen durch ein Endgerät zum Umsetzen eines Verfahrens zum Senden und Empfangen nach einem der Ansprüche 1 bis 2, wobei dieses Verfahren aufweist:
e) das Empfangen durch eine oder mehrere ECM-Nachrichten eines Kryptogramms CW*ₜ des Steuerworts CWₜ,
f) das Lokalisieren der Position des Kryptogramms CW*ₜ in der empfangenen ECM-Nachricht mit Hilfe eines ausführbaren Codes eines Parsers und dann das Entschlüsseln des Kryptogramms mit Hilfe von einem Nutzungsschlüssel und einem ausführbaren Code eines Entschlüsselungsalgorithmus, wobei der ausführbare Code des Parsers und des Entschlüsselungsalgorithmus in einer virtuellen Tochterkarte enthalten sind, die der virtuellen Mutterkarte zugeordnet wird, und das Entwürfeln der Kryptoperiode CPt des verwürfelten Multimedia-Inhaltes mit Hilfe des entschlüsselten Steuerworts CWₜ,
**dadurch gekennzeichnet dass** das Verfahren aufweist:
g) als Antwort auf ein Ändern der virtuellen Mutterkarte durch den Sender,
- wenn der Satz von virtuellen Tochterkarten, der diesem Multimedia-Inhalt zugeordnet wird, in dem Endgerät voraufgezeichnet wird: das Auswählen durch das Endgerät von einer virtuellen Tochterkarte, die zum Entschlüsseln des Kryptogramms CW*ₜ zu verwenden ist, aus diesem Satz von virtuellen Tochterkarten, die in dem Endgerät voraufgezeichnet werden, derart, um das Steuerwort CWₜ zu erhalten, wobei sich jede virtuelle Tochterkarte von einer anderen virtuellen Tochterkarte des Satzes durch ihren Nutzungsschlüssel und mindestens den ausführbaren Code ihres Verschlüsselungsalgorithmus oder des Syntaxkonstruktors unterscheidet, und
- wenn der Satz von virtuellen Tochterkarten, der diesem Multimedia-Inhalt zugeordnet wird, in dem Endgerät nicht voraufgezeichnet wird, das Nichterfolgen des Auswählens durch das Endgerät einer virtuellen Tochterkarte, die zum Entschlüsseln des Kryptogramms CW*ₜ zu verwenden ist, derart, um das Erhalten des Steuerwort CWₜ zu verhindern.

8. Verfahren nach dem Anspruch 7, wobei das Verfahren aufweist:
- das Empfangen einer Kennung einer virtuellen Tochterkarte bei dem Schritt e) und
- das Auswählen durch das Endgerät der virtuellen Tochterkarte aus dem Satz von voraufgezeichneten Karten ausgehend von der Kennung, die in dem Schritt g) empfangen wird.

9. Verfahren nach einem der Ansprüche 7 bis 8, wobei das Verfahren ebenfalls aufweist:
- das Empfangen bei dem Schritt e) durch das Endgerät von einer oder mehreren zusätzlichen Anweisungen und
- als Antwort das Ändern des ausführbaren Codes der ausgewählten virtuellen Tochterkarte durch Ergänzen und/oder Ersetzen nur eines Teils der Anleitungen des ausführbaren Codes dieser virtuellen Tochterkarte durch die empfangene Anleitung oder empfangenen Anleitungen.

10. Verfahren nach einem der Ansprüche 8 bis 9, wobei das Verfahren aufweist:
h) das Empfangen durch das Endgerät einer verschlüsselten virtuellen Tochterkarte,
i) das Speichern der empfangenen, verschlüsselten virtuellen Tochterkarte, um diese Karte zu dem Satz von voraufgezeichneten virtuellen Tochterkarten hinzuzufügen und
j) das Entschlüsseln der verschlüsselten virtuellen Tochterkarte als Antwort auf das Empfangenen der Kennung,
wobei die Schritte h), i) und j) vor dem Umsetzen der Schritte e) und g) durchgeführt werden.

11. Informationsaufzeichnungsmedium, **dadurch gekennzeichnet, dass** es Anweisungen für das Ausführen eines Verfahrens nach einem der Ansprüche 1 bis 10 aufweist, wenn diese Anleitungen von einem elektronischen Rechner ausgeführt werden.

12. Sender zum Umsetzen eines Verfahrens zum Erzeugen von ECM-Nachrichten nach einem der Ansprüche 3 bis 6, wobei der Sender aufweist:
- einen Verwürfler (22) zum Verwürfeln einer jeweiligen Kryptoperiode CPₜ eines Multimedia-Inhaltes mit Hilfe von einem Steuerwort CWₜ,
- ein System (28), um:
das Steuerwort CWₜ mit Hilfe eines Nutzungsschlüssels und eines ausführbaren Codes eines Verschlüsselungsalgorithmus, die in einer virtuellen Mutterkarte enthalten sind, zu verschlüsseln, um das Kryptogramm CW*ₜ zu erhalten und um eine ECM-Nachricht zu erzeugen, die das Kryptogramm CW*ₜ enthält, und um
eine ECM-Nachricht (Entitlement Control Message), die das Kryptogramm CW*ₜ enthält, mit Hilfe eines ausführbaren Codes eines Syntaxkonstruktors, der in der virtuellen Mutterkarte enthalten ist, zu erzeugen,
**dadurch gekennzeichnet, dass** das System (28) programmiert ist, um:
- die verwendete virtuelle Mutterkarte mindestens alle zwei Stunden zu ändern, um das Kryptogramm CW*ₜ₊ₙ einer nächsten Kryptoperiode CPₜ₊ₙ zu erhalten, wobei sich die neue verwendete virtuelle Mutterkarte von der vorherigen verwendeten virtuellen Mutterkarte durch den Nutzungsschlüssel und mindestens den ausführbaren Code ihres Verschlüsselungsalgorithmus oder des Syntaxkonstruktors unterscheidet,
- in Abhängigkeit von dem zu verwürfelnden Multimedia-Inhalt einen Satz von mehreren verschiedenen virtuellen Mutterkarten aus mehreren Sätzen von virtuellen Mutterkarten mit Hilfe von einer Beziehung auszuwählen, die jedem Multimedia-Inhalt einen einzigen Satz von virtuellen Mutterkarten zuordnet, wobei jede virtuelle Mutterkarte ausschließlich zu einem einzigen Satz gehört, und
- die Steuerwörter zum Verwürfeln eines Multimedia-Inhalts nur mit Hilfe von virtuellen Mutterkarten zu verschlüsseln, die aus dem Satz ausgewählt sind, der diesem Inhalt zugeordnet ist, derart, um den Zugriff auf den verwürfelten Multimedia-Inhalt nur auf die Empfangsendgeräte zu beschränken, die über den voraufgezeichneten Satz von virtuellen Tochterkarten verfügen, der diesem Satz von virtuellen Mutterkarten entspricht.

13. Empfangsendgerät zum Umsetzen eines Verfahrens nach einem der Ansprüche 7 bis 10, wobei dieses Empfangsendgerät aufweist:
- einen Satz (100, 104) von voraufgezeichneten virtuellen Tochterkarten,
- einen Empfänger (70), der geeignet ist, durch eine oder mehrere ECM-Nachrichten ein Kryptogramm CW*ₜ des Steuerworts CWₜ zu empfangen,
- einen integrierten Schaltkreis (76), der programmiert ist, um:
die Position des Kryptogramms CW*ₜ in der empfangenen ECM-Nachricht mit Hilfe eines ausführbaren Codes eines Parsers zu lokalisieren und dann das Kryptogramm mit Hilfe von einem Nutzungsschlüssel und einem ausführbaren Code eines Entschlüsselungsalgorithmus zu entschlüsseln, wobei der ausführbare Code des Parsers und des Entschlüsselungsalgorithmus in einer virtuellen Tochterkarte enthalten sind, die der virtuellen Mutterkarte zugeordnet ist, und
die Kryptoperiode CPₜ des verwürfelten Multimedia-Inhaltes mit Hilfe des entschlüsselten Steuerworts CWₜ zu entwürfeln, und
**dadurch gekennzeichnet, dass** der integrierte Schaltkreis (76) programmiert ist, um als Antwort auf ein Ändern der virtuellen Mutterkarte durch den Sender:
- wenn der Satz von virtuellen Tochterkarten, der diesem Multimedia-Inhalt zugeordnet ist, in dem Endgerät voraufgezeichnet ist: eine neue virtuelle Tochterkarte, die zum Entschlüsseln des Kryptogramms CW*ₜ zu verwenden ist, aus diesem Satz von voraufgezeichneten virtuellen Tochterkarten derart auszuwählen, um das Steuerwort CWₜ₊ₙ₋ zu erhalten, wobei sich jede virtuelle Tochterkarte von einer anderen virtuellen Tochterkarte des Satzes durch ihren Nutzungsschlüssel und mindestens den ausführbaren Code ihres Verschlüsselungsalgorithmus oder des Syntaxkonstruktors unterscheidet, und
- wenn der Satz von virtuellen Tochterkarten, der diesem Multimedia-Inhalt zugeordnet ist, in dem Endgerät nicht voraufgezeichnet ist, das Nichterfolgen des Auswählens durch das Endgerät einer virtuellen Tochterkarte, die zum Entschlüsseln des Kryptogramms CW*ₜ zu verwenden ist, derart, um das Erhalten des Steuerwort CWₜ zu verhindern.

## Claims

1. Method for transmitting and receiving a multimedia content each cryptoperiod CPₜ of which is scrambled using a respective control word CWₜ, the method including:
- an emitter encrypting the control word CWₜ using an operating key and an executable code of an encrypting algorithm that are contained in a virtual motherboard so as to obtain a cryptogram CW*ₜ;
- generating an ECM (Entitlement Control Message) incorporating the cryptogram CW*ₜ using an executable code of a syntax constructor contained in the virtual motherboard and transmitting this ECM to a terminal;
- the terminal receiving the ECM, the position of the cryptogram CW*ₜ in the received ECM being located using an executable code of a syntax analyzer, the cryptogram then being decrypted using the operating key and an executable code of a decrypting algorithm, the executable code of the syntax analyzer and of the decrypting algorithm being contained in a virtual daughterboard associated with the virtual motherboard; and
- unscrambling the cryptoperiod CPₜ of the scrambled multimedia content using the decrypted control word CWₜ,
**characterized in that** the method also includes:
- the emitter changing, at least every two hours, the virtual motherboard used to obtain the cryptogram CW*ₜ₊ₙ, in a subsequent cryptoperiod CPₜ₊ₙ, of the same multimedia content, the new virtual motherboard used differing from the preceding virtual motherboard used in its operating key and at least the executable code of its encrypting algorithm or of the syntax constructor;
- in response, the terminal selecting a new virtual daughterboard to be used to decrypt the cryptogram CW*ₜ₊ₙ so as to obtain the control word CWₜ₊ₙ; and
- selecting, depending on the multimedia content to be scrambled, a set of a plurality of different virtual motherboards from a plurality of sets of virtual motherboards, using a relationship associating, with each multimedia content, a single set of virtual motherboards, each virtual motherboard exclusively belonging to a single set,
- the control words for scrambling a multimedia content being encrypted only using virtual motherboards selected from the set associated with this content, so as to limit access to the scrambled multimedia content solely to receiver terminals having a pre-recorded set of virtual daughterboards corresponding to this set of virtual motherboards.

2. Method according to Claim 1, wherein the new virtual motherboard used differs from the preceding virtual motherboard used in the executable code of its encrypting algorithm and of the syntax constructor.

3. Method for generating ECMs for implementing a method for transmitting and receiving multimedia content according to either one of the preceding claims, each ECM including a cryptogram CW*ₜ of a control word CWₜ used to scramble a respective cryptoperiod CPₜ of a given multimedia content, the method including:
a) encrypting the control word CWₜ using an operating key and an executable code of an encrypting algorithm that are contained in a virtual motherboard so as to obtain the cryptogram CW*ₜ; and
b) generating an ECM incorporating the cryptogram CW*ₜ using an executable code of a syntax constructor contained in the virtual motherboard,
**characterized in that**, the method also includes:
c) changing, at least every two hours, the virtual motherboard used to obtain the cryptogram CW*ₜ₊ₙ in a subsequent cryptoperiod CPₜ₊ₙ, the new virtual motherboard used differing from the preceding virtual motherboard used in the operating key and at least the executable code of its encrypting algorithm or of the syntax constructor; and
- selecting, depending on the multimedia content to be scrambled, a set of a plurality of different virtual motherboards from a plurality of sets of virtual motherboards, using a relationship associating, with each multimedia content, a single set of virtual motherboards, each virtual motherboard exclusively belonging to a single set,
- the control words for scrambling a multimedia content being encrypted only using virtual motherboards selected from the set associated with this content, so as to limit access to the scrambled multimedia content solely to receiver terminals having the pre-recorded set of virtual daughterboards corresponding to this set of virtual motherboards.

4. Method according to Claim 3, wherein the method includes transmitting to the terminal, in an ECM, an identifier of the virtual daughterboard to be used to decrypt the cryptogram CWₜ₊ₙ*.

5. Method according to either one of Claims 3 and 4, wherein, in step c), the virtual motherboard is selected from a set of virtual boards that are pre-recorded in the emitter, the virtual boards belonging to this set being distinct from one another.

6. Method according to Claim 5, wherein, in step c), the virtual motherboard is selected pseudo-randomly among the set of virtual boards pre-recorded in the emitter.

7. Receiving method, implemented by a terminal, for implementing a transmitting and receiving method according to Claims 1 and 2, this method including:
e) receiving, by way of one or more ECMs, a cryptogram CW*ₜ of the control word CWₜ;
f) locating the position of the cryptogram CW*ₜ in the received ECM using an executable code of a syntax analyzer, then decrypting the cryptogram using an operating key and an executable code of a decrypting algorithm, the executable code of the syntax analyzer and of the decrypting algorithm being contained in a virtual daughterboard associated with the virtual motherboard, and unscrambling the cryptoperiod CPₜ of the scrambled multimedia content using the decrypted control word CWₜ,
**characterized in that** the method includes:
g) in response to a change of virtual motherboard by the emitter,
- if the set of virtual daughterboards that is associated with this multimedia content is pre-recorded in the terminal: the terminal selecting a virtual daughterboard to be used to decrypt the cryptogram CW*ₜ from this set of virtual daughterboards that are pre-recorded in the terminals so as to obtain the control word CWₜ, each virtual daughterboard differing from the other virtual daughterboards of the set in its operating key and at least the executable code of its encrypting algorithm or of the syntax analyzer; and
- if the set of virtual daughterboards that is associated with this multimedia content is not pre-recorded in the terminal, the absence of selection by the terminal of a virtual daughterboard to be used to decrypt the cryptogram CW*ₜ inhibiting the obtainment of a control word CWₜ.

8. Method according to Claim 7, wherein the method includes:
- receiving an identifier of a virtual daughterboard in step e); and
- the terminal selecting the virtual daughterboard from the set of pre-recorded boards on the basis of the identifier received in step g).

9. Method according to either one of Claims 7 and 8, wherein the method also includes:
- the terminal receiving, in step e), one or more additional instructions; and
- in response, modifying the executable code of the selected virtual daughterboard so as to complete and/or replace only some of the instructions of the executable code of this virtual daughterboard with the one or more received instructions.

10. Method according to either one of Claims 8 and 9, wherein the method includes:
h) the terminal receiving an encrypted virtual daughterboard;
i) storing the received encrypted virtual daughterboard in memory so as to add this board to the set of pre-recorded virtual daughterboards; and
j) decrypting the encrypted virtual daughterboard in response to the reception of the identifier,
steps h), i), and j) being executed before the implementation of steps e) and g).

11. Data storage medium **characterized in that** it includes instructions for executing a method according to any one of Claims 1 to 10, when these instructions are executed by an electronic processor.

12. Emitter for implementing a method for generating ECMs according to any one of Claims 3 to 6, the emitter including:
- a scrambler (22) for scrambling a respective cryptoperiod CPₜ of a multimedia content using a control word CWₜ; and
- a system (28) for:
encrypting the control word CWₜ using an operating key and an executable code of an encrypting algorithm that are contained in a virtual motherboard so as to obtain the cryptogram CW*ₜ, and to generate an ECM incorporating the cryptogram CW*ₜ, and for
generating an ECM (Entitlement Control Message) incorporating the cryptogram CW*ₜ using an executable code of a syntax constructor contained in the virtual motherboard,
**characterized in that** the system (28) is programmed:
- to change the virtual motherboard used, at least every two hours, to obtain the cryptogram CW*ₜ₊ₙ in a subsequent cryptoperiod CPₜ₊ₙ, the new virtual motherboard used differing from the preceding virtual motherboard used in the operating key and at least the executable code of its encrypting algorithm or of the syntax constructor;
- to select, depending on the multimedia content to be scrambled, a set of a plurality of different virtual motherboards from a plurality of sets of virtual motherboards, using a relationship associating, with each multimedia content, a single set of virtual motherboards, each virtual motherboard exclusively belonging to a single set,
- to encrypt the control words for scrambling a multimedia content only using virtual motherboards selected from the set associated with this content, so as to limit access to the scrambled multimedia content solely to receiver terminals having the pre-recorded set of virtual daughterboards corresponding to this set of virtual motherboards.

13. Receiver terminal for implementing a method according to any one of Claims 7 to 10, this receiver terminal including:
- a set (100, 104) of pre-recorded virtual daughterboards;
- a receiver (70) that is able to receive, by way of one or more ECMs, a cryptogram CW*ₜ of the control word CWₜ; and
- an integrated circuit (76) programmed:
to locate the position of the cryptogram CW*ₜ in the received ECM using an executable code of a syntax analyzer then to decrypt this cryptogram using an operating key and an executable code of a decrypting algorithm, the executable code of the syntax analyzer and of the decrypting algorithm being contained in a virtual daughterboard associated with a virtual motherboard; and
to unscramble the cryptoperiod CPₜ of the scrambled multimedia content using the decrypted control word CWₜ; and
**characterized in that** the integrated circuit (76) is programmed to, in response to a change of virtual motherboard by the emitter:
- if the set of virtual daughterboards that is associated with this multimedia content is pre-recorded in the terminal: select a new virtual daughterboard to be used to decrypt the cryptogram CW*ₜ from this set of pre-recorded virtual daughterboards so as to obtain the control word CWₜ+ₙ, each virtual daughterboard differing from the other virtual daughterboards of the set in its operating key and at least the executable code of its encrypting algorithm or of the syntax analyzer; and
- if the set of virtual daughterboards that is associated with this multimedia content is not pre-recorded in the terminal, the absence of selection by the terminal of a virtual daughterboard to be used to decrypt the cryptogram CW*ₜ inhibiting the obtainment of the control word CWₜ.
